# EUROPEAN PATENT SPECIFICATION

(11) **EP 3 691 064 B1**
(45) Date of publication and mention of the grant of the patent: **01.12.2021**
(21) Application number: 20154447.5
(22) Date of filing: 29.01.2020
(51) Int. Cl.: H02G 3/12, H02G 3/18

(54) **ELECTRIC OR ELECTRONIC DEVICE FOR MOUNTING IN A MOUNTING BOX**
ELEKTRISCHE ODER ELEKTRONISCHE VORRICHTUNG ZUR MONTAGE IN EINEM MONTAGEKASTEN
DISPOSITIF ÉLECTRIQUE OU ÉLECTRONIQUE À MONTER DANS UN BOÎTIER DE MONTAGE

(30) Priority: 31.01.2019 BE 201905054
(43) Date of publication of application: 05.08.2020
(73) Proprietor: Niko NV, 9100 Sint-Niklaas (BE)
(72) Inventor: VAN RANST, Jurgen, 9040 Gent (BE); RYMENAMS, Carl, 4576 EE Koewacht (NL)
(74) Representative: DenK iP bv

(56) References cited:
- EP-A1- 2 924 815
- WO-A1-2015/075361
- DE-U1- 29 805 172
- FR-A1- 2 796 774

## Description

### Technical field of the invention

The present invention relates to electric or electronic devices. More particularly, the present invention relates to electric or electronic devices such as e.g. a socket, a smart socket, a switch, a smart switch, a dimmer or the like, for mounting in a mounting box in a wall, ceiling or floor.

### Background of the invention

Electric or electronic devices, such as switches, sockets, dimmers or the like may typically be installed into a mounting box in a wall, ceiling or floor. This may be done in two different ways, i.e. by screwing a wall-frame or part of the device to a mounting box installed in a wall or by using fixing claws, which are used to clamp the device into the mounting box. In the latter case, the fixing claws are "activated" by screwing a screw-nut combination, which causes the fixing claws to move outwards and clamp into the mounting box.

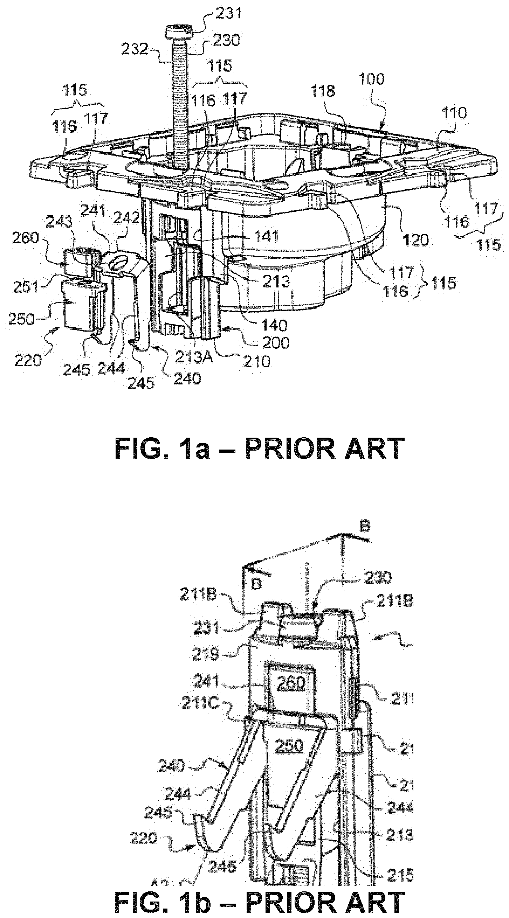

FR 2956259 relates to a fixing claw assembly 220 for fixing an equipment support 100 to a mounting box in a wall and is illustrated in Figs. 1a and 1b. The fixing claw assembly 220 comprises a fixing claw 240 comprising a main wall 241 equipped with a hinge 242 for pivoting relative to the equipment support 100, a claw screw 230 comprising an screw head 231 and a threaded body (232) engaged through an opening 243 provided in the main wall 241 of the claw 240, a lower nut 250 screwed onto the threaded body 232 of the claw screw 230 so that the main wall 241 of the fixing claw 240 is located between the screw head 231 of the claw screw 230 and the lower nut 250. The fixing claw assembly 220 furthermore comprises an upper nut 260 screwed onto the threaded body 232 of the claw screw 230 between the screw head 231 of the claw screw 230 and the main wall 241 of the fixing claw 240. The fixing claw 240 has at least one hooking bracket 244 extending from the main wall 241 in a direction opposite to the screw head 231 of the claw screw 230.

WO 2015/075361 describes an apparatus support 100 for an electric or electronic device (see Fig. 2). The apparatus support 100 comprises a frame 110 surrounding an opening 113 for receiving an electric or electronic device function. Further, the apparatus support 100 comprises at least one claw base 210 and a fixing claw 220 mounted on this claw base and being pivotingly movable between a retracted position and a deployed position with respect to the claw base. According to the invention, the support comprises rack mounting means 350 which cooperate with complementary mounting means belonging to the claw base, so that the claw base is adapted to be mounted on the apparatus support at at least two different heights with respect to the frame of this support.

FR2796774 provides a fixing claw with an extension part for fixing a device in a mounting box in a wall in case the mechanism to be installed in the mounting box requires longer claws to be anchored in the mounting box to ensure a reliable fixation.

DE29805172 describes a fastening device for electrical installation devices for installation in a mounting box in a wall by means of fixing claws which press against the inner wall of the mounting box under the action of an adjusting screw. Each fixing claw forms a structural unit with its adjusting screw and a guide part.

EP2924 815 describes a mounting interface for fixing an electrical module to a wall. The mounting interface has a central opening through which the electrical module can be inserted in the mounting interface. This mounting interface comprises an arch or bridge which has internal plug terminals for plugging the electrical module therein. The arch comprises external connection terminals which are accessible for inserting external wires from electrical module. According to particular embodiments, the arch comprises claw based fixation or locking means fixedly connecting the arch to a surrounding embedded housing, a mounting box, or a similar reception device, the control means of said locking or fixation means being accessible through the central opening.

In the above described devices, when screwing the fixing screw too hard, the clamping force can get considerably high, which results in high stress concentrations on the device parts. Eventually, such high stress concentrations can lead to failure of the fixing claws or even of the complete device, because the device parts, and especially the housing of the device, which is normally made out of plastic, can break or deform. This can cause a lot of trouble. For example, in case of a socket, this can cause the socket to be pulled out of the wall, even during normal use of the socket, when plugging in and out a plug.

As mentioned above, due to the too high initial stress concentration on plastic parts of the electric or electronic device, these parts can break. But even if this does not happen right away, over time, visco-elastic effects in the plastics, also referred to as creep or stress relaxation, can cause a deformation of these plastic parts which can make the device fail and/or eventually break.

This plastic deformation can also cause a further problem. When screwing the screw, the part of the plastic housing below the screw head, can also deform, especially in case of thermoplastic materials. As a result, the screw does not really come to an end position. This means that the torque on the screw never gets high enough. A user assumes the device is not well fixed to the mounting box and keeps screwing which again can lead to further deforming of the housing and eventually to breaking of the housing because, at the end, the screw will go through the plastic.

### Summary of the invention

It is an object of embodiments of the present invention to provide an electric or electronic device with fixing claws that is robust and which does not deform or break as a result of too high stress concentrations on weak, plastic parts.

The above objective is accomplished by a device according to embodiments of the present invention.

The present invention provides an electric or electronic device, such as a socket, a smart socket, a switch, a smart switch, a dimmer, a USB charger, audio connectors, a network outlet, a TV outlet or the like. The electric or electronic device comprises a housing, a wall frame for fixing the electric or electronic device to a wall, ceiling or floor, and two fixing claws for fixing the electric or electronic device in a mounting box in the wall, ceiling or floor. The electric or electronic device furthermore comprises a reinforcement structure that is supported by a support structure on the wall frame and that is connected to the housing. The fixing claws are removably connected to the reinforcement structure, the reinforcement structure being formed by two braces provided at opposite sides of the housing. Each brace comprises a connection part for connecting the reinforcement structure to the housing and a U-shaped feature with two legs fixedly connected to the connection part and extending away from that connection part in a direction substantially perpendicular to that connection part.

An advantage of an electric or electronic device according to embodiments of the invention is, because of the way the reinforcement structure is provided, mechanical stress concentrations on weak parts, e.g. plastic parts such as the housing, of the electric or electronic device can be neutralised or at least reduced as much as possible.

Such structure may particularly be useful when the plastic parts of an electric or electronic device are made of thermoplastic material, but also have benefits when thermosetting materials are used.

The way the reinforcement structure is provided makes a stronger electric or electronic device with respect to currently existing devices, because the reinforcement structure makes sure that claw forces are not transmitted to the housing of the electric or electronic device.

With the reinforcement structure being supported by the support structure is meant that the reinforcement structure is not connected to the support structure, but the support structure makes sure that the reinforcement structure is stopped from moving because of the pulling apart force.

According to embodiments of the invention, the connection part may comprise a snap feature for connecting the reinforcement structure to the housing and for snapping over the support structure. The U-shaped feature may comprise a recess further connecting the reinforcement structure to the housing. According to embodiments of the invention, the U-shaped feature may comprise a groove on an outer side of each leg for further connecting the reinforcement structure to the housing.

The reinforcement structure may furthermore comprise first and second claw connection features. The first claw connection features may be for defining of a rotation axis of the fixing claws and for removably connecting the fixing claws to the reinforcement structure. According to embodiments of the invention, the first claw connection features may be formed by a recess in each of the legs at a side closest to the connection part. The second claw connection features may be for defining an open position of the fixing claws, i.e. a position when the fixing claws are not fixed to a mounting box. According to embodiments of the invention, the second claw connection feature may comprise a hole in each leg of the U-shaped feature of the reinforcement structure. According to other embodiments of the invention, the second claw connection feature may comprise a groove on an inner side of each leg of the U-shaped feature of the reinforcement structure.

According to embodiments of the invention, the reinforcement structure may be made of metal. The housing may further be provided with a power PCB comprising power electronics for the electric or electronic device.

The housing may also furthermore comprise a further PCB comprising electronics for controlling other electric or electronic devices via a home automation system.

### Brief description of the drawings

It has to be noted that same reference signs in the different figures refer to same, similar or analogous elements.
Figs. 1a and 1b respectively illustrate an electric device and a fixing claw according to the prior art.
Fig. 2 illustrates an electric device according to the prior art.
Figs. 3a to 3c illustrate fixing claw forces exerted to parts of an electric or electronic device when screwing the fixing claws for fixing the device in a mounting box in a wall, ceiling or floor.
Fig. 4 shows an exploded view of an electric or electronic device according to embodiments of the invention.
Figs. 5a and 5b schematically illustrate a wall frame/support structure assembly according to different embodiments of the invention.
Figs. 6 and 7 illustrates reinforcement structures according to an embodiment of the invention.
Fig. 8 schematically illustrates an electric or electronic device according to embodiments of the invention.
Fig. 9 schematically illustrates an electric or electronic device according to embodiments of the invention.
Fig. 10 schematically illustrates the connection between a wall frame and a brace according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

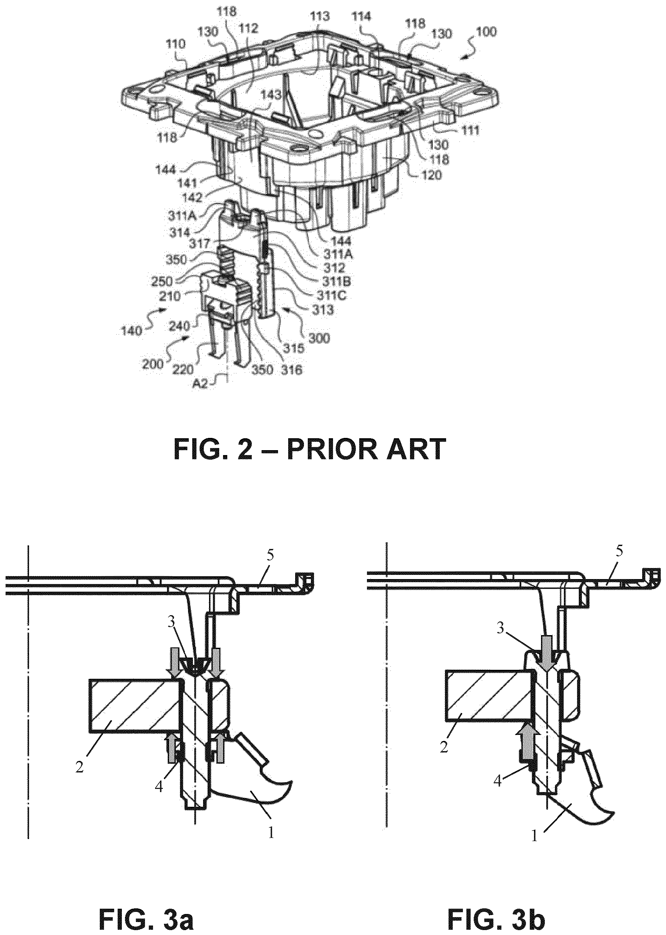

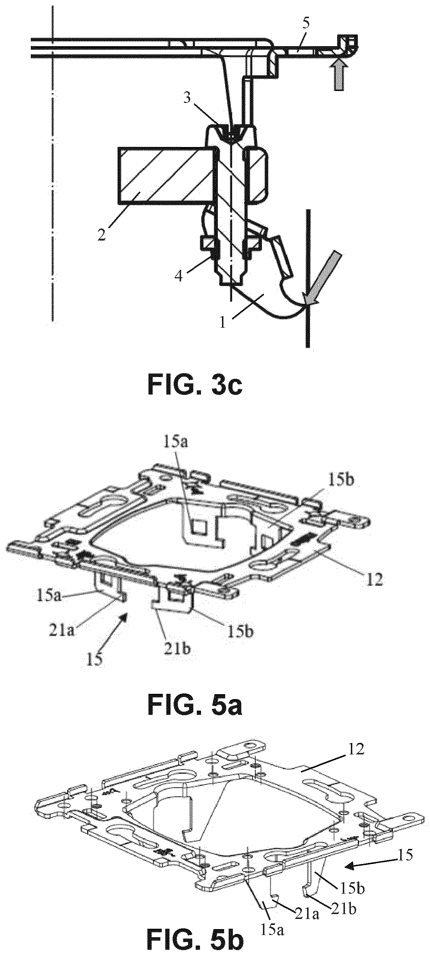

As already described above, prior art devices having fixing claws 1 for fixing the device into a mounting box in a wall, ceiling or floor suffer from high stress concentrations because of the claw forces exerted on plastic parts, such as the housing 2, of the device. The stress concentrations in most fixing claw devices can be divided into three categories. A first one is the clamping force. When the screw 3 is tightened, the nut 4 moves upwards and forces the fixing claw 1 to move outwards. By this action, the screw-nut combination 3,4 applies a clamping force to the housing 2. This clamping force squeezes the housing 2. This is illustrated in Fig. 3a. A second force category, which is illustrated in Fig. 3b, is the bending moment. When the fixing claw 1 is moving outwards by the screw-nut combination 3, 4, the reaction force of the nut 4 is transferred to the fixing claw 1, and this claw force acts on the housing 2. The claw force on the housing 2 is not aligned to the axis of the screw 3, and therefore it creates a bending moment together with the screw head force on the housing 2. This bending moment will cause mechanical stress to the housing 2. The third force category is the pulling apart force (see Fig. 3c). When the screw 3 is tightened until the fixing claw 1 grips into the mounting box (in the drawing pictured as a vertical line), the mounting box applies a reaction force to the fixing claw 1, which has a horizontal and a vertical component. The vertical component on the fixing claw 1 pulls the assembly into the wall. In the meantime, since the wall frame 5 is supported by the wall, the wall will apply a reaction force to the wall frame 5. This reaction force and the vertical component of the claw reaction force together, try to pull the assembly apart.

Because of all the above claw forces, high stress concentrations can act on the electric or electronic device. Especially the plastic parts can suffer from such high stress concentrations, and can deform and even break.

In order to overcome the above problem, the present invention provides an electric or electronic device, such as a socket, a smart socket, a switch, a smart switch, a dimmer, a USB charger, audio connectors, a network outlet, a TV outlet or the like. The electric or electronic device comprises a housing, a wall frame for fixing the electric or electronic device to a wall, ceiling or floor, and two fixing claws for fixing the electric or electronic device in a mounting box in the wall, ceiling or floor. The electric or electronic device furthermore comprises a reinforcement structure that is supported by a support structure on the wall frame and that is connected to the housing. The fixing claws are removably connected to the reinforcement structure, the reinforcement structure being formed by two braces provided at opposite sides of the housing. Each brace comprises a connection part for connecting the reinforcement structure to the housing and a U-shaped feature with two legs fixedly connected to the connection part and extending away from that connection part in a direction substantially perpendicular to that connection part.

An advantage of an electric or electronic device according to embodiments of the invention is, because of the way the reinforcement structure is provided, mechanical stress concentrations on weak parts, e.g. plastic parts such as the housing, of the electric or electronic device can be neutralised or at least reduced as much as possible.

Such structure is particularly useful when the plastic parts of an electric or electronic device are made of thermoplastic material, but also have benefits when thermosetting materials are used. The way the reinforcement structure is provided makes a stronger electric or electronic device with respect to currently existing devices, because the reinforcement structure makes sure that claw forces are not transmitted to the housing of the electric or electronic device.

The present invention will hereinafter be described by means of different embodiments. It has to be understood that these embodiments are only for the ease of understanding the invention and are not intended to limit the invention in any way.

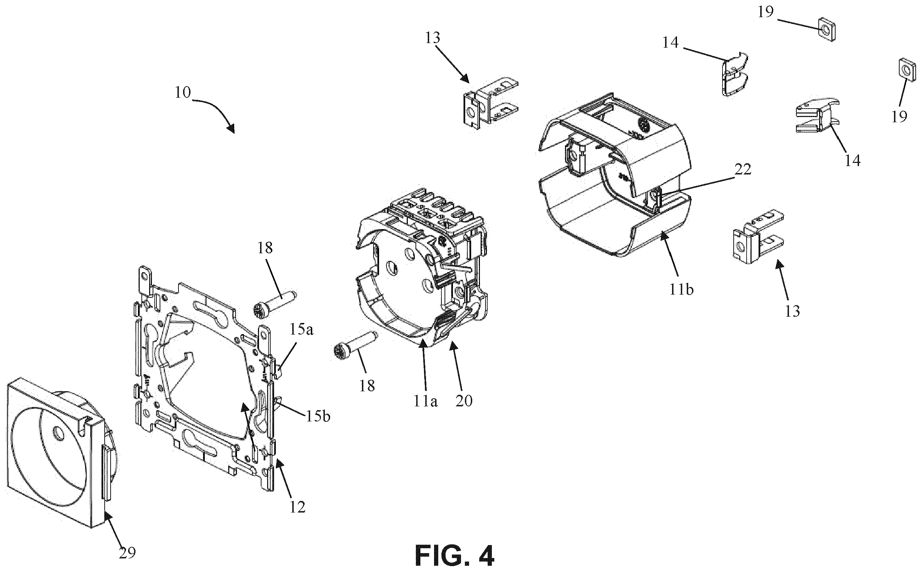

Fig. 4 schematically illustrates an exploded view of an electric or electronic device 10 according to embodiments of the invention. In the example given, the electric or electronic device is a socket 10. The socket 10 comprises a housing 11. According to embodiments of the invention, and as illustrated in Fig. 4, the housing 11 may comprise two parts, a housing front 11a and a housing back 11b. According to other embodiments of the invention, the housing 11 may, for example, also be formed as one part. According to further embodiments of the invention, the housing 11 may also comprise two parts which are welded together so as to from one part. According to the embodiment illustrated in Fig. 4, the housing front 11a may be welded to the socket base 20 and then the housing back 11b may be provided. According to further embodiments, the housing 11 may comprise other electronic parts than a socket base 20, depending on the type of electric or electronic device 10.

The socket 10 also comprises a wall frame 12 for fixing the socket 10, or in general the electric or electric device 10, to a wall, ceiling or floor.

According to embodiments of the invention, the socket 10, or more in general the electric or electronic device 10, furthermore comprises a reinforcement structure 13. This reinforcement structure 13 serves to neutralize or at least significantly reduce mechanical stress concentrations on weak, plastic parts of the electric or electronic device 10, such as the housing 11, so as to prevent these parts from deforming or breaking.

Therefore, the reinforcement structure 13 is supported by a support structure 15 on the wall frame 12 and is connected to the housing 11. With the reinforcement structure 13 being supported by the support structure 15 is meant that the reinforcement structure 13 is not necessarily fixedly connected to the support structure 15, but the support structure 15 makes sure that the reinforcement structure 13 is stopped from moving because of the pulling apart force (see further). In other words, the support structure limits the movement of the reinforcement structure, thereby preventing forces to be transferred to plastic parts of the electric or electronic device 10.

Different embodiments of a suitable support structures 15 on the wall frame 12 are illustrated in Figs. 5a and 5b. As can be seen in the drawings, the support structure 15 may comprise two support elements 15a, 15b at two opposite sides of the wall frame 12. The two support elements 15a, 15b are spaced apart and extend from the wall frame 12 in a direction substantially perpendicular to the plane of the wall frame 12. At their ends away from the wall frame 12, each of the support elements 15a, 15b comprises a protrusion 21a, 21b, in such a way that the protrusions of two support elements 15a, 15b at one side of the wall frame 12 are facing each other. In other words, the protrusions 21a, 21b are located in between the two support elements 15a, 15b. The support elements 15a, 15b may be slightly tilted with respect to each other. Hereby is meant that they do not lie in one plane, but that their planes make a small angle with each other. An advantage hereof is that the assembly becomes more stiff and is less sensitive to deformation. However, the two support elements 15a, 15b being slightly tilted with respect to each other and to wall frame 12 is not mandatory. According to other embodiments, the two support elements 15a, 15b may be lying in a same plane and are not tilted with respect to each other or the wall frame 12.

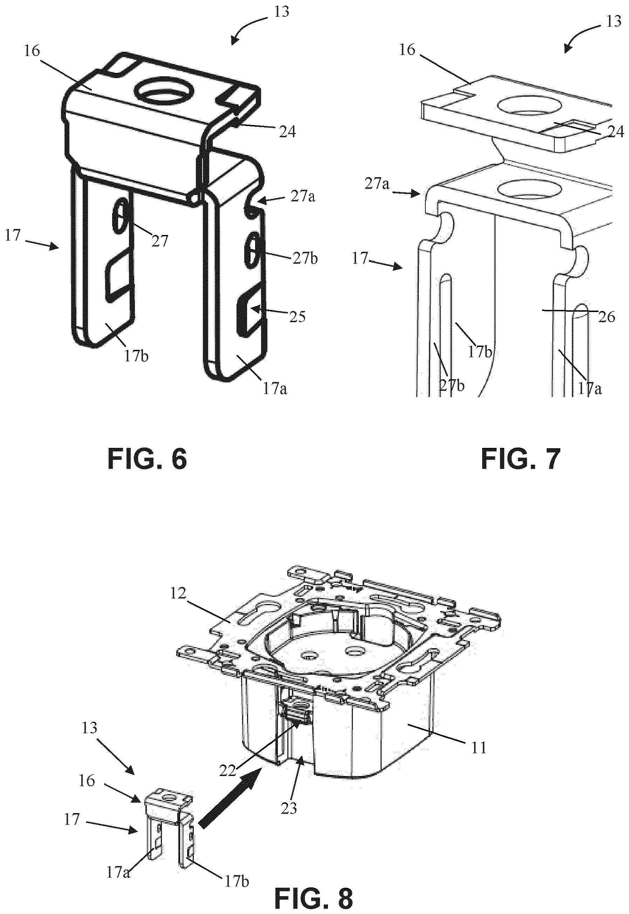

According to embodiments of the invention, the reinforcement structure 13 may comprise two braces, one at each of opposite sides of the housing 11. Such a brace 13 is illustrated in Figs. 6 and 7. The brace 13 may comprise a connection part 16 for connecting the brace 13 to the support structure 15 on the wall frame 12 and for connecting it to the housing 11.

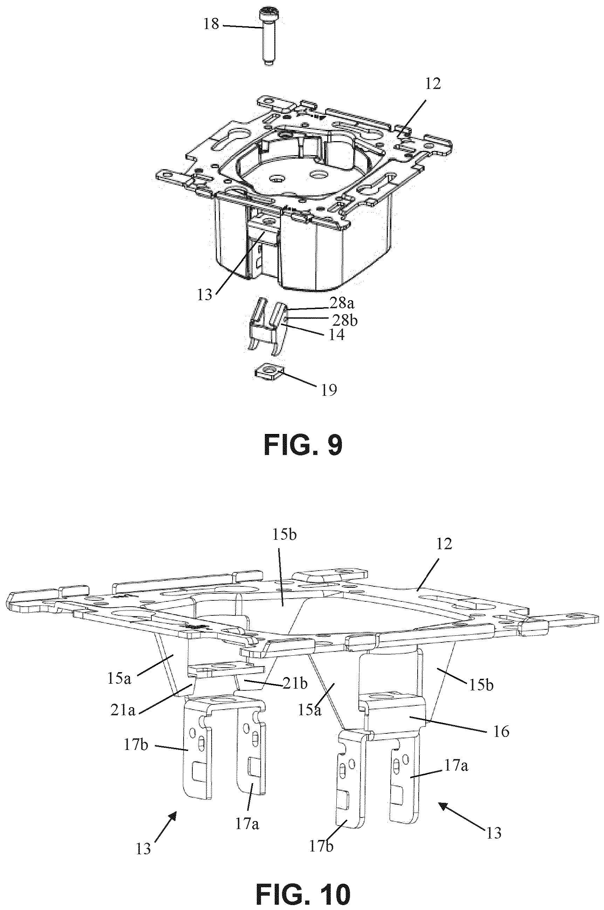

The connection part 16 of the brace 13 may be adapted for being slid over the protrusions 21a, 21b of the support structure 15 on the wall frame 12. Therefore, the connection part 16 may comprise a snap feature 24 for snapping over the support elements 15a, 15b of the support structure 15. This is illustrated in Fig. 10.

The brace 13 further comprises a U-shaped feature 17 fixedly connected to the connection part 16. The U-shaped feature 17 extends away from the connection part 16 in a direction substantially perpendicular to the plane of that connection part 16. The U-shaped feature 17 has two legs 17a, 17b which, when the brace 13 is provided in a groove 23 in the housing 11, contact the side walls of the housing 11. The end of the connection part 16 that is not connected to the U-shaped feature 17, may comprise a snap feature 24 that can be clicked onto the a part 22 of the housing 11, thereby correctly positioning the reinforcement structure 13. At the same time, this snap feature 24 snaps over the support elements 15a, 15b of the support structure 15 on the wall frame 12. The support elements 15a, 15b thereby support the reinforcement structure 13 and keep it from moving in a direction perpendicular to the wall. The reinforcement structure 13 then has a further fixing feature 25 for further fixing the reinforcement structure 13 to the housing11. According to the embodiment illustrated in Fig. 6, the further fixing feature 25 may be located at a lower end of legs 17a, 17b, and may be formed as recesses 25 in the leg 17a, 17b. Another embodiment of a reinforcement structure or brace 13 that can be used according to the invention is illustrated in Fig. 7. The brace 13 according to this embodiment has the same shape as described in the embodiment with respect to Fig. 6, except for the features that are provided in the legs 17a, 17b for fixing the brace 13 to the housing 11. According to this embodiment, the legs 17a, 17b may, at an outer side, i.e. the sides of both legs 17a, 17b facing the side walls of the groove 23 in the housing 11, comprise a small groove 26 over substantially the whole length of the leg 17a, 17b. Protrusions (not shown in the figures) provided at both sides of part 22 of the housing 11 then fit into these grooves 26 for fixing the reinforcement structure 13 to the housing 11. Furthermore, the groove 26 in the leg 17a, 17b also functions as a receptacle for a dome shaped feature in housing part 22, in the assembled position it acts as a feature that keeps the claw in the initial open position.

In a groove of the housing 11, a part 22 is provided over which the connection part 16 can be slid (see Fig. 8).

After providing the reinforcement structure 13 to the wall frame 12, the fixing claws 14 are provided for fixing the electric or electronic device 10, in the example given socket 10, to a mounting box in a wall, ceiling or floor. Therefore, the reinforcement structure or brace 13 comprises a claw connecting features 27a and 27b. Two small protrusion 28a, 28b at the outer sides of the fixing claws 14 then fit into these claw connecting feature 27a and 27b on the brace 13 (see Fig. 9). The first claw connecting feature 27a is for receiving first protrusions 28a of the fixing claw 14. The first claw connecting feature 27a may be formed by a recess 27a in each leg 17a, 17b at an end of the legs 17a, 17b closest to the connection part 16. This first claw connecting feature 27a is for defining of the rotating axis of the fixing claws 14 and for removably connecting the fixing claw 14 to the reinforcement structure or brace 13. The second claw connecting feature 27b may be formed as, according to the embodiment illustrated in Figs. 6, a hole 27b provided in the legs 17a, 17b of the reinforcement structure or brace 13 or, as illustrated in Fig. 7, as a small groove 27b provided at the inner side of the legs 17a, 17b, i.e. at a side of the legs 17a, 17b facing each other. The second claw connecting feature 27b may be for defining the open position of the fixing claws 14, i.e. when the fixing claws 14 are not fixed to the mounting box.

Then, screws 18 and nuts 19 are provided so as to further fix housing, wall frame and reinforcement structure together, but mainly for, when the electric or electronic device has to be provided in a mounting box in a wall or ceiling, moving the fixing claws outward and clamp into the mounting box.

The reinforcement structure 13 may be made of metal. Metals have a much higher strength and stiffness than polymer materials, thermoplastic as well as thermosetting polymers, through which they are able to take the claw forces much better without deforming or breaking, such that these claw forces are not transmitted to the housing 11. According to the invention, any metal may be suitable to be used for the reinforcement structure 13. The most important properties to be taken into account are hardness, stiffness, and cost. Steel and aluminium are good candidates because of their high stiffness and low cost. The stiffness may not be too low, because otherwise the reinforcement structure 13 would have to be made way too thick. However, because of cost issues, preferably steel or aluminium may be used.

The clamping force, as illustrated in Fig. 3a, will act on the metal U-shaped feature 17 of the reinforcement structure 13. The U-shaped feature 17 is stiff and strong enough to withstand that clamping force without deformation and therefore reduces or takes away any squeezing stress on the plastic parts, such as the housing 11. It will provide feedback to the user, by increase of the torque. Further, this U-shaped feature 17 is hard enough, so it will not be deformed by the screw head.

Mechanical stress concentrations induced by the bending moment, as illustrated in Fig. 3b, will be minimized by different mechanisms. First, the bending moment will try to rotate the reinforcement structure or brace 13, but it will be stopped by the housing 11. Thanks to the legs 17a, 17b, the force on the housing 11, and therefore the stress concentration, will be limited because of the lever principle. Secondly, the upward force exerted by the wall frame 12 will make the reinforcement structure or brace 13 want to rotate in the opposite direction of the main bending moment, because the supporting elements 15a, 15b are located at the outside of the screw 18, creating a moment in the opposite direction as the claw moment. So this force will work together with the bending moment so as to neutralize the claw moment.

With respect to the pulling apart force, as illustrated in Fig. 3c, the reinforcement structure or brace 13 is supported by a supporting structure 15 on the wall frame 12, this support structure 15 will make sure that the assembly is not pulled apart by the vertical component of the claw force.

The electric or electronic device socket 10 may furthermore comprises a power PCB comprising power electronics for the electric or electronic device 10. In case of a socket, the power PCB may furthermore comprise a pin earthing and pole contacts. However, according to the type of electric or electronic device 10, the power electronics and further parts may be different. According to still further embodiments and in case of smart devices, not shown in the figures, the device 10 may furthermore comprise a further PCB comprising electronics for controlling other electric or electronic devices. In such cases, the device 10 may be a stand-alone device or may be part of a bigger home automation system.

The electric or electronic device, in the example given, the socket 10, can then further be finished with a central plate 29 and a cover plate (not shown in Fig. 4). Again, this central plate 29 may be different depending on the type of electric or electronic device 10.

## Claims

1. An electric or electronic device (10) comprising a housing (11), a wall frame (12) for fixing the electric or electronic device (10) to a wall, ceiling or in a floor, and two fixing claws (14) for fixing the electric or electronic device (10) in a mounting box in the wall, ceiling or floor;
wherein the electric or electronic device (10) furthermore comprises a reinforcement structure (13) that is supported by a support structure (15) on the wall frame (12) and that is connected to the housing (11), and wherein the fixing claws (14) are removably connected to the reinforcement structure (13), the reinforcement structure (13) being formed by two braces provided at opposite sides of the housing (11),
wherein each brace (13) comprises a connection part (16) for connecting the reinforcement structure (13) to the housing (11) and a U-shaped feature (17) with two legs (17a, 17b) fixedly connected to the connection part (16) and extending away from that connection part (16) in a direction substantially perpendicular to that connection part (16).

2. An electric or electronic device (10) according to claim 1, wherein the connection part (16) comprises a snap feature (24) for connecting the reinforcement structure (13) to the housing 11 and for snapping over the support structure 15.

3. An electric or electronic device (10) according to claim 1 or 2, wherein the U-shaped feature (17) comprises a recess (25) for further connecting the reinforcement structure (13) to the housing (11).

4. An electric or electronic device (10) according to claim 1 or 2, wherein the U-shaped feature (17) comprises a groove (26) on an outer side of each leg (17a, 17b) for further connecting the reinforcement structure (13) to the housing (11).

5. An electric or electronic device (10) according to any of the previous claims, wherein the reinforcement structure (13) furthermore comprises first and second claw connecting features (27a, 27b), wherein first claw connecting features (27a) are for defining of a rotation axis of the fixing claws (14) and for removably connecting the fixing claws (14) to the reinforcement structure (13).

6. An electric or electronic device (10) according to claim 5 when dependent on any of claims 2 to 5, wherein the first claw connecting features (27a) is formed by a recess (27a) in each of the legs (17a, 17b) at a side closest to the connection part (16).

7. An electric or electronic device (10) according to claim 5, wherein the second claw connecting feature (27b) is formed by a hole (27b) in each leg (17a, 17b) of the U-shaped feature (17) of the reinforcement structure (13).

8. An electric or electronic device (10) according to claim 5, wherein the second claw connecting feature (27b) is formed by a groove (27b) on an inner side of each leg (17a, 17b) of the U-shaped feature (17) of the reinforcement structure (13).

9. An electric or electronic device (10) according to any of the previous claims, wherein the reinforcement structure (13) is made of metal.

10. An electric or electronic device (10) according to any of the previous claims, wherein the housing (11) is further provided with a power PCB comprising power electronics for the electric or electronic device (10).

11. An electric or electronic device (10) according to any of the previous claims, wherein the housing (11) furthermore comprises a further PCB comprising electronics for controlling other electric or electronic devices via a home automation system.

12. An electric or electronic device (10) according to any of the previous claims, wherein the electric or electronic device (10) is a socket, a smart socket, a switch, a smart switch, a dimmer, a USB charger, audio connectors, a network outlet or a TV outlet.

## Patentansprüche

1. Elektrische oder elektronische Vorrichtung (10), die ein Gehäuse (11), einen Wandrahmen (12) zum Befestigen der elektrischen oder der elektronischen Vorrichtung (10) an einer Wand, einer Decke oder in einem Boden und zwei Befestigungsklauen (14) zum Befestigen der elektrischen oder der elektronischen Vorrichtung (10) in einem Montagekasten in der Wand, der Decke oder dem Boden umfasst;
wobei die elektrische oder die elektronische Vorrichtung (10) ferner eine Verstärkungsstruktur (13) umfasst, die durch eine Stützstruktur (15) an dem Wandrahmen (12) gestützt wird und die mit dem Gehäuse (11) verbunden ist, und wobei die Befestigungskrallen (14) mit der Verstärkungsstruktur (13) entfernbar verbunden sind, wobei die Verstärkungsstruktur (13) durch zwei Klammern ausgebildet wird, die an gegenüberliegenden Seiten des Gehäuses (11) bereitgestellt sind,
wobei jede Klammer (13) ein Verbindungsteil (16) zum Verbinden der Verstärkungsstruktur (13) mit dem Gehäuse (11) und einen U-förmigen Zusatz (17) mit zwei Schenkeln (17a, 17b) umfasst, die mit dem Verbindungsteil fest verbunden sind (16) und sich aus diesem Verbindungsteil (16) weg in eine Richtung erstreckt, die im Wesentlichen senkrecht zu diesem Verbindungsteil (16) ist.

2. Elektrische oder elektronische Vorrichtung (10) nach Anspruch 1, wobei das Verbindungsteil (16) einen Schnappzusatz (24) zum Verbinden der Verstärkungsstruktur (13) mit dem Gehäuse 11 und zum Schnappen über die Stützstruktur 15 umfasst.

3. Elektrische oder elektronische Vorrichtung (10) nach Anspruch 1 oder 2, wobei der U-förmige Zusatz (17) eine Aussparung (25) zum weiteren Verbinden der Verstärkungsstruktur (13) mit dem Gehäuse (11) umfasst.

4. Elektrische oder elektronische Vorrichtung (10) nach Anspruch 1 oder 2, wobei der U-förmige Zusatz (17) eine Nut (26) an einer Außenseite jedes Schenkels (17a, 17b) zum weiteren Verbinden der Verstärkungsstruktur (13) mit dem Gehäuse (11) umfasst.

5. Elektrische oder elektronische Vorrichtung (10) nach einem der vorhergehenden Ansprüche, wobei die Verstärkungsstruktur (13) ferner erste und zweite Klauenverbindungszusätze (27a, 27b) umfasst, wobei erste Klauenverbindungszusätze (27a) zum Definieren einer Drehachse der Befestigungsklauen (14) und zum entfernbaren Verbinden der Befestigungsklauen (14) mit der Verstärkungsstruktur (13) dienen.

6. Elektrische oder elektronische Vorrichtung (10) nach Anspruch 5, wenn abhängig von einem der Ansprüche 2 bis 5, wobei die ersten Klauenverbindungszusätze (27a) durch eine Aussparung (27a) in jedem der Schenkel (17a, 17b) an einer dem Verbindungsteil (16) am nächsten liegenden Seite ausgebildet sind.

7. Elektrische oder elektronische Vorrichtung (10) nach Anspruch 5, wobei der zweite Klauenverbindungszusatz (27b) durch ein Loch (27b) in jedem Schenkel (17a, 17b) des U-förmigen Zusatzes (17) der Verstärkungsstruktur (13) ausgebildet ist.

8. Elektrische oder elektronische Vorrichtung (10) nach Anspruch 5, wobei der zweite Klauenverbindungszusatz (27b) durch eine Nut (27b) auf einer Innenseite jedes Schenkels (17a, 17b) des U-förmigen Zusatzes (17) der Verstärkungsstruktur (13) ausgebildet ist.

9. Elektrische oder elektronische Vorrichtung (10) nach einem der vorhergehenden Ansprüche, wobei die Verstärkungsstruktur (13) aus Metall besteht.

10. Elektrische oder elektronische Vorrichtung (10) nach einem der vorhergehenden Ansprüche, wobei das Gehäuse (11) ferner mit einer Leistungs-PCB versehen ist, die Leistungselektronik für die elektrische oder die elektronische Vorrichtung (10) umfasst.

11. Elektrische oder elektronische Vorrichtung (10) nach einem der vorhergehenden Ansprüche, wobei das Gehäuse (11) ferner eine weitere PCB umfasst, die Elektronik zum Steuern anderer elektrischer oder elektronischer Vorrichtungen über ein Hausautomationssystem umfasst.

12. Elektrische oder elektronische Vorrichtung (10) nach einem der vorhergehenden Ansprüche, wobei die elektrische oder die elektronische Vorrichtung (10) eine Buchse, eine intelligente Buchse, ein Schalter, ein intelligenter Schalter, ein Dimmer, ein USB-Ladegerät, Audioverbinder, ein Netzwerkausgang oder ein TV-Ausgang ist.

## Revendications

1. Dispositif électrique ou électronique (10) comprenant un boîtier (11), un cadre mural (12) pour fixer le dispositif électrique ou électronique (10) à un mur, au plafond ou dans un sol, et deux griffes de fixation (14) pour fixer le dispositif électrique ou électronique (10) dans une boîte de montage dans le mur, le plafond ou le sol ;
dans lequel le dispositif électrique ou électronique (10) comprend en outre une structure de renforcement (13) qui est supportée par une structure de support (15) sur le cadre mural (12) et qui est reliée au boîtier (11), et dans lequel les griffes de fixation (14) sont reliées de manière amovible à la structure de renforcement (13), la structure de renforcement (13) étant formée par deux ferrures prévues sur des côtés opposés du boîtier (11),
dans lequel chaque ferrure (13) comprend une partie de liaison (16) pour relier la structure de renforcement (13) au boîtier (11) et un élément en forme de U (17) avec deux branches (17a, 17b) reliées fixement à la partie de liaison (16) et s'étendant à partir de cette partie de liaison (16) dans une direction sensiblement perpendiculaire à cette partie de liaison (16).

2. Dispositif électrique ou électronique (10) selon la revendication 1, dans lequel la partie de liaison (16) comprend un élément d'encliquetage (24) pour relier la structure de renforcement (13) au boîtier (11) et pour s'encliqueter sur la structure de support (15).

3. Dispositif électrique ou électronique (10) selon la revendication 1 ou 2, dans lequel l'élément en forme de U (17) comprend un évidement (25) pour relier en outre la structure de renforcement (13) au boîtier (11).

4. Dispositif électrique ou électronique (10) selon la revendication 1 ou 2, dans lequel l'élément en forme de U (17) comprend une rainure (26) sur un côté extérieur de chaque branche (17a, 17b) pour relier davantage la structure de renforcement (13) au boîtier (11).

5. Dispositif électrique ou électronique (10) selon l'une quelconque des revendications précédentes, dans lequel la structure de renforcement (13) comprend en outre des premier et second éléments de liaison à griffes (27a, 27b), les premiers éléments de liaison à griffes (27a) étant destinés à définir d'un axe de rotation des griffes de fixation (14) et pour relier de manière amovible les griffes de fixation (14) à la structure de renforcement (13).

6. Dispositif électrique ou électronique (10) selon la revendication 5 lorsqu'elle dépend de l'une quelconque des revendications 2 à 5, dans lequel les premiers éléments de liaison à griffes (27a) sont formés par un évidement (27a) dans chacune des branches (17a, 17b) sur un côté le plus proche de la partie de liaison (16).

7. Dispositif électrique ou électronique (10) selon la revendication 5, dans lequel le second élément de liaison à griffes (27b) est formé par un trou (27b) dans chaque branche (17a, 17b) de l'élément en forme de U (17) de la structure de renforcement (13).

8. Dispositif électrique ou électronique (10) selon la revendication 5, dans lequel le second élément de liaison à griffes (27b) est formé par une rainure (27b) sur un côté intérieur de chaque branche (17a, 17b) de l'élément en forme de U (17) de la structure de renforcement (13).

9. Dispositif électrique ou électronique (10) selon l'une quelconque des revendications précédentes, dans lequel la structure de renforcement (13) est en métal.

10. Dispositif électrique ou électronique (10) selon l'une quelconque des revendications précédentes, dans lequel le boîtier (11) est en outre pourvu d'une PCB de puissance comprenant une électronique de puissance pour le dispositif électrique ou électronique (10).

11. Dispositif électrique ou électronique (10) selon l'une quelconque des revendications précédentes, dans lequel le boîtier (11) comprend en outre une PCB supplémentaire comprenant une électronique pour commander d'autres dispositifs électriques ou électroniques par l'intermédiaire d'un système domotique.

12. Dispositif électrique ou électronique (10) selon l'une quelconque des revendications précédentes, dans lequel le dispositif électrique ou électronique (10) est une prise, une prise intelligente, un interrupteur, un interrupteur intelligent, un gradateur, un chargeur USB, des connecteurs audio, une prise réseau ou une prise de télévision.
